(19) Europäisches Patentamt
European Patent Office
Office européen des brevets

(11) **EP 4 503 204 A1**

(12) **EUROPEAN PATENT APPLICATION**
published in accordance with Art. 153(4) EPC

(43) Date of publication:
**05.02.2025 Bulletin 2025/06**

(21) Application number: **23778752.8**

(22) Date of filing: **19.01.2023**

(51) International Patent Classification (IPC):
*H01M 4/66* (2006.01)    *C21D 9/46* (2006.01)

(52) Cooperative Patent Classification (CPC):
**C21D 9/46; H01M 4/66;** Y02E 60/10

(86) International application number:
**PCT/JP2023/001441**

(87) International publication number:
**WO 2023/188713 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022060412**
**30.06.2022 JP 2022106531**

(71) Applicant: **NIPPON STEEL CHEMICAL & MATERIAL CO., LTD.**
**Tokyo 103-0027 (JP)**

(72) Inventors:
• **YASHIRO, Atsushi**
  **Tokyo 103-0027 (JP)**
• **ISHIKAWA, Noriaki**
  **Tokyo 103-0027 (JP)**
• **UNNO, Hiroto**
  **Tokyo 103-0027 (JP)**
• **HAGIWARA, Yoshiaki**
  **Tokyo 103-0027 (JP)**
• **NAKATSUKA, Jun**
  **Tokyo 103-0027 (JP)**

(74) Representative: **Zimmermann & Partner**
**Patentanwälte mbB**
**Postfach 330 920**
**80069 München (DE)**

(54) **STEEL FOIL FOR CURRENT COLLECTOR, AND ALL-SOLID-STATE SECONDARY CELL**

(57) Provided is a steel foil for a current collector that is less susceptible to buckling or bending by heat treatment at a temperature that is high enough to crystallize active material after the active material layer is formed, and an all-solid-state secondary cell that incorporates such a steel foil for a current collector. The steel foil for a current collector according to the present disclosure includes a ferritic stainless steel foil. In an X-ray diffraction profile with CoKα rays of the ferritic stainless steel foil according to the present disclosure, the half width Fw of the peak for the {110} plane is 0.40 to 0.52°.

**EP 4 503 204 A1**

**Description**

TECHNICAL FIELD

The present disclosure relates to a steel foil for a current collector for use in an electrode of a cell and an all-solid-state secondary cell that incorporates such a steel foil for a current collector.

BACKGROUND ART

Hitherto, cells such as primary cells and secondary cells have been used as power sources for various electronic devices. Further, in recent years, in response to the widespread use of small electronic devices such as home video cameras, laptop PCs, and smartphones, secondary cells as typified by lithium-ion batteries have rapidly become widespread.

A secondary cell includes an electrode, which includes a positive electrode and a negative electrode, and an electrolyte. Both the positive electrode and the negative electrode are of active material layers formed on a current collector. That is, the current collector is a base material for the electrode. The active material layer refers to a layer that contains an active material. The current collector has a function of supplying electric current to the active material and has a function of holding the active material.

Hitherto, metal foils have been used as base materials for current collectors of secondary cells. Specifically, for example, in the current lithium-ion batteries, a copper foil is used as a negative electrode current collector and an aluminum foil is used as a positive electrode current collector. In the meantime, there may be a case in which the secondary cell is assumed to be used in a harsher environment than ever before. Accordingly, it has been required for the base material for a current collector to have a higher strength and more excellent heat resistance than a copper foil or an aluminum foil. Therefore, as a base material for a current collector, attention has been paid to a stainless steel foil, which has excellent strength and heat resistance over the copper foil and the aluminum foil.

Japanese Patent Application Publication No. 2003-178753 (Patent Literature 1) and Japanese Patent Application Publication No. 2016-186881 (Patent Literature 2) propose techniques for applying a stainless steel foil to a current collector.

Patent Literature 1 discloses a lithium battery in which the current collector of the positive electrode thereof is made of a ferritic stainless steel foil that has a thickness of 12 $\mu$m or less. Patent Literature 1 discloses that the reason why the ferritic stainless steel foil is used as the current collector is that, compared to an austenitic stainless steel such as SUS304 and SUS316, a ferritic stainless steel has good workability, so that it is suitable for preparing a thin foil and productivity can be improved.

Patent Literature 2 discloses a negative electrode for a lithium-ion battery, in which the current collector of the negative electrode is a stainless steel foil or an Ni plated steel sheet that has a thickness of 15 $\mu$m or less. Patent Literature 2 discloses that the reason why the stainless steel foil or the Ni plated steel sheet is used as the current collector is that these are highly strong, so that these are not susceptible to a reduction in strength even in a heat treatment at about 300°C and can retain the initial strength after imidization and iminization processes at a high temperature.

CITATION LIST

PATENT LITERATURE

Patent Literature 1: Japanese Patent Application Publication No. 2003-178753
Patent Literature 2: Japanese Patent Application Publication No. 2016-186881

SUMMARY OF INVENTION

TECHNICAL PROBLEM

As proposed in Patent Literatures 1 and 2 described above, using a stainless steel foil as a base material for a current collector allows a high strength current collector to be obtained with high productivity. In the meantime, further in recent years, the development of all-solid-state secondary cells has been proceeding in order to achieve both an increase in the energy density and safety. The all-solid-state secondary cell refers to a secondary cell in which solid electrolyte is used in place of electrolytic solution used in traditional secondary cells, and an electrode, which includes a current collector and an active material layer, electrolyte, and the like are all formed in a solid state.

Here, for the all-solid-state secondary cell, after an active material layer is formed on the surface of the current collector, the active material may be crystallized to obtain good cell characteristics. In this case, the current collector with the active material layer formed on the surface thereof is subjected to heat treatment at a high temperature of about 700°C, for example. In the meantime, when the active material is subjected to heat treatment in such a high temperature for crystallization, the active material layer shrinks. As a result, dimensional variation due to the heat shrinkage between the active material layer and the current collector may lead to buckling or bending of the current collector.

Accordingly, for a steel foil for a current collector intended to be applied to the all-solid-state secondary cell, it is preferable that buckling or bending is less likely to occur even when the active material layer shrinks by heat treatment at a high temperature of about 700°C, for example. However, in Patent Literatures 1 and 2 described above, no consideration has been made on the possibility of occurrence of buckling or bending when the active material is to be crystallized as in the all-solid-state secondary cell.

An objective of the present disclosure is to provide a steel foil for a current collector that is less susceptible to buckling or bending by heat treatment at a temperature that is high enough to crystallize an active material after an active material layer is formed, and an all-solid-state secondary cell that incorporates such a steel foil for a current collector.

SOLUTION TO PROBLEM

A steel foil for a current collector according to the present disclosure includes:

a ferritic stainless steel foil,
wherein:
in an X-ray diffraction profile with $CoK\alpha$ rays, a half width Fw of a peak for a {110} plane of the ferritic stainless steel foil is 0.40 to 0.52°.

An all-solid-state secondary cell according to the present disclosure includes:

the above-described steel foil for a current collector;
an active material layer;
a solid electrolyte layer; and
a current collector layer.

ADVANTAGEOUS EFFECT OF INVENTION

The steel foil for a current collector according to the present disclosure is less susceptible to buckling or bending by heat treatment at a temperature that is high enough to crystallize an active material after an active material layer is formed.

DESCRIPTION OF EMBODIMENT

The inventors first considered to use a ferritic stainless steel foil as the base material for the steel foil for a current collector. The ferritic stainless steel foil is highly stable at a high temperature compared to a nonferrous metal foil such as an aluminum foil. Furthermore, the ferritic stainless steel foil has low electric resistance and high conductivity compared to an austenitic stainless steel foil. In view of these, the inventors chose to use the ferritic stainless steel foil as the base material for the steel foil for a current collector.

As described above, for a steel foil for a current collector intended to be applied to the all-solid-state secondary cell, it is preferable that buckling or bending is less likely to occur even when the active material layer shrinks by heat treatment at a high temperature of about 700°C, for example. Therefore, the inventors conducted a detailed study on steel foils that are less susceptible to buckling or bending by heat treatment at a high temperature of about 700°C. As a result of the detailed study, the inventors have considered that if the steel foil for a current collector can be allowed to be thermally shrunk to some extent when the active material layer thermally shrink in association with crystallization of the active material, it may be possible to suppress the occurrence of buckling or bending of the steel foil for a current collector.

Specifically, the inventors have looked at strain in the ferritic stainless steel foil, which is the base material for the steel foil for a current collector. If the amount of strain in the ferritic stainless steel foil can be controlled, it may be possible to control heat shrinkage of the steel foil for a current collector at the time of heat treatment at about 700°C after the active material layer is formed. As a result, when the steel foil for a current collector with the active material layer formed thereon is subjected to heat treatment at about 700°C, it may be possible to suppress the occurrence of buckling or bending.

As a result of the detailed study based on the knowledges of the inventors as described above, provided that the half width Fw of the peak for the {110} plane of the ferritic stainless steel foil is 0.40 to 0.52° in an X-ray diffraction profile with CoKα rays, it has been revealed that the occurrence of buckling or bending can be suppressed when the steel foil for a current collector with the active material layer formed thereon is subjected to heat treatment at about 700°C.

If the half width Fw of the peak for the {110} plane of the ferritic stainless steel foil in the X-ray diffraction profile with CoKα rays (hereinafter referred to simply as "the half width Fw of the {110} plane") is too small, the amount of strain of the ferritic stainless steel foil is excessively small. In this case, strain relief does not occur in heat treatment at about 700°C, and heat shrinkage does not occur in the heat treatment. As a result, pulled by the thermally shrunk active material layer, the steel foil for a current collector bends. On the other hand, if the half width Fw of the {110} plane of the ferritic stainless steel foil is too large, the amount of strain of the ferritic stainless steel foil increases excessively. In this case, too much strain is relieved in heat treatment at about 700°C and excessive heat shrinkage occurs in the heat treatment. As a result, thermally shrunk beyond the heat shrinkage of the active material layer, the steel foil for a current collector is buckled.

Accordingly, in the steel foil for a current collector according to the embodiment, the half width Fw of the peak for the {110} plane of the ferritic stainless steel foil is 0.40 to 0.52°. As a result, even when heat treatment is performed at about 700°C after the active material layer is formed on the surface of the steel foil for a current collector according to the embodiment, buckling or bending is less likely to occur.

The gist of the steel foil for a current collector according to the embodiment, which has been completed based on the knowledges as described above, is as follows.

[1] A steel foil for a current collector, including:

a ferritic stainless steel foil,
wherein:
in an X-ray diffraction profile with CoKα rays, a half width Fw of a peak for a {110} plane of the ferritic stainless steel foil is 0.40 to 0.52°.

[2] The steel foil for a current collector according to [1], wherein:

in a surface of the ferritic stainless steel foil,
when an arithmetic average roughness in an arbitrary direction is defined as Ra1 and
an arithmetic average roughness in a direction orthogonal to the arbitrary direction is defined as Ra2,
both the Ra1 and the Ra2 are 0.03 to 0.30 μm.

[3] The steel foil for a current collector according to [1], wherein:
a thickness of the ferritic stainless steel foil is 5 to 60 μm.
[4] The steel foil for a current collector according to [2], wherein:
a thickness of the ferritic stainless steel foil is 5 to 60 μm.
[5] The steel foil for a current collector according to [1], wherein:
a resin coating is formed on a surface of the ferritic stainless steel foil.
[6] The steel foil for a current collector according to [2], wherein:
a resin coating is formed on a surface of the ferritic stainless steel foil.
[7] The steel foil for a current collector according to [3], wherein:
a resin coating is formed on a surface of the ferritic stainless steel foil.
[8] The steel foil for a current collector according to [4], wherein:
a resin coating is formed on a surface of the ferritic stainless steel foil.
[9] An all-solid-state secondary cell, including:

a steel foil for a current collector according to any one of [1] to [8];
an active material layer;
a solid electrolyte layer; and
a current collector layer.

The steel foil for a current collector according to the embodiment will now be described.

[Steel foil for current collector]

The steel foil for a current collector according to the embodiment includes a ferritic stainless steel foil, which is a base material. Note that the steel foil for a current collector according to the embodiment may include any other components than the ferritic stainless steel foil.

[Ferritic stainless steel foil]

The base material for the steel foil for a current collector according to the embodiment is a ferritic stainless steel foil. Specifically, the ferritic stainless steel foil refers to a steel foil in which the content of Cr is 10.5% or more and the microstructure thereof is mainly of ferrite. In the specification, the microstructure being mainly of ferrite means that the volume ratio of ferrite is 95% or more in the microstructure.

In the embodiment, a metal foil made of a well-known ferritic stainless steel can be used for the ferritic stainless steel foil. For example, the ferritic stainless steel foil according to the embodiment may be SUS405 defined in JIS G 4305 (2012), may be SUS410L, may be SUS429, may be SUS430, may be SUS430LX, may be SUS430J1L, may be SUS434, may be SUS436L, may be SUS436J1L, may be SUS443J1, may be SUS444, may be SUS445J1, may be SUS445J2, may be SUS447J1, or may be SUSXM27.

Furthermore, for example, the ferritic stainless steel foil according to the embodiment may be 403 defined in ASTM A 280 (2006), may be 405, may be 409L, may be 410, may be 410L, may be 410S, may be 415, may be 420J1, may be 420J2, may be 420, may be 429, may be 429J1, may be 430, may be 430J1L, may be 430LX, may be 430Ti, may be 434, may be 436, may be 436J1L, may be 439, may be 441, may be 444, may be 445, may be 445J1, may be 445J2, may be 446, may be 447, or may be 448.

Preferably, the thickness of the ferritic stainless steel foil according to the embodiment is 5 to 60 $\mu$m. As the thickness of the ferritic stainless steel foil is thinner, the steel foil for a current collector becomes thinner. As a result, the energy density of a cell, which incorporates an electrode produced with the steel foil for a current collector, increases. However, excessively thin ferritic stainless steel foils make it difficult to produce the steel foil for a current collector. Accordingly, in the embodiment, the thickness of the ferritic stainless steel foil is preferably 5 to 60 $\mu$m.

[Half width Fw of peak for {110} plane]

In an X-ray diffraction profile with CoK$\alpha$ rays, the half width Fw of the peak for the {110} plane of the ferritic stainless steel foil according to the embodiment is 0.40 to 0.52°. As a result, the steel foil for a current collector including the ferritic stainless steel foil according to the embodiment as the base material is less susceptible to buckling or bending when subjected to heat treatment at about 700°C after the active material layer is formed.

If the half width Fw of the {110} plane of the ferritic stainless steel foil is too small, the amount of strain of the ferritic stainless steel foil is excessively small. In this case, strain relief does not occur in heat treatment at about 700°C, and heat shrinkage does not occur in the heat treatment. As a result, pulled by the thermally shrunk active material layer, the steel foil for a current collector bends. On the other hand, if the half width Fw of the {110} plane of the ferritic stainless steel foil is too large, the amount of strain of the ferritic stainless steel foil increases excessively. In this case, too much strain is relieved in heat treatment at about 700°C and excessive heat shrinkage occurs in the heat treatment. As a result, thermally shrunk beyond the heat shrinkage of the active material layer, the steel foil for a current collector is buckled.

A preferable lower limit of the half width Fw for the {110} plane of the ferritic stainless steel foil according to the embodiment is 0.41, further preferably 0.43, and further preferably 0.45. When the half width Fw of the {110} plane is 0.45 or more, it is possible to further suppress bending in heat treatment at about 700°C after the active material layer is formed. A preferable upper limit of the half width Fw of the {110} plane of the ferritic stainless steel foil according to the embodiment is 0.51, further preferably 0.50, and further preferably 0.48.

In the embodiment, the half width Fw of the {110} plane of the ferritic stainless steel foil can be measured in a way described below. Test specimens are prepared from the steel foil for a current collector according to the embodiment. Sizes of the test specimens are not particularly limited, and the thickness of a test specimen is the same as the thickness of the steel foil. Measurement is performed on an observation surface of a test specimen by using Grazing Incident X-ray Diffraction (GIXD). Specifically, the radiation source is CoK$\alpha$ rays, the tube voltage is set to 40 kV, and the tube current is set to 135 mA. A mirror is used to collimate a flux of X-rays. The solar slit is set to 5° on the incident side and 2.5° on the diffraction side. The incidence angle is defined into 12 conditions in the range of 1 to 25° such that 12 points of observation depths are obtained from an observation surface of a test specimen in the range of 0.19 to 4.60 $\mu$m. At each observation point, the peak for the {110} plane is identified, and the half width is determined. The arithmetic average value of resultant 12 half widths is defined as the half width Fw of the {110} plane. An X-ray penetration depth t, which satisfies $\mu t=1$ where $\mu$ is a linear absorption coefficient, is determined, and in turn converted into a depth from the observation surface of the test specimen, which is used for the observation depth. For a mass absorption coefficient, 19.11Cr-1.77Mo-78.38Fe (mass%) is used. Furthermore, for the density of the ferritic stainless steel foil, 7.75 g/cm$^3$ is used.

[Arithmetic average roughnesses Ra1 and Ra2]

Preferably, in the ferritic stainless steel foil according to the embodiment, when in a surface thereof, an arithmetic average roughness in an arbitrary direction is defined as Ra1 and an arithmetic average roughness in a direction orthogonal to the direction of Ra1 is defined as Ra2, both the Ra1 and the Ra2 are 0.03 to 0.30 μm.

Here, the all-solid-state secondary cell is used by repeating charge and discharge multiple times. In the meantime, the secondary cell tends to experience a decrease in the charge-discharge capacity of the cell by repeating charge and discharge multiple times. Accordingly, it is preferable for the all-solid-state secondary cell that the charge-discharge capacity of the cell can be maintained even when charge and discharge are repeated multiple times. In the specification, the ability to maintain the charge-discharge capacity of the cell even when charge and discharge are repeated is also referred to as having excellent cycle performance.

Accordingly, it is preferable that the all-solid-state secondary cell has excellent cycle performance. The inventors then conducted a detailed study on a steel foil for a current collector for obtaining an all-solid-state secondary cell that has excellent cycle performance. Specifically, the inventors produced ferritic stainless steel foils variously ranging from 0.40 to 0.52° in terms of the half width Fw of the peak for the {110} plane, and prepared replicas of the all-solid-state secondary cell. The inventors evaluated a retention rate of the charge-discharge capacity of the cell (capacity retention rate) by repeating charge and discharge of the prepared replicas multiple times. As a result, the inventors have newly found that the surface roughness of the ferritic stainless steel foil affects cycle performance of the all-solid-state secondary cell.

Considering that the surface roughness of the ferritic stainless steel foil may have anisotropy, the inventors have first looked at the arithmetic average roughness for two directions in the surface. Specifically, in the specification, in the surface of the ferritic stainless steel foil, the arithmetic average roughness in an arbitrary direction is defined as Ra1 and the arithmetic average roughness in the direction orthogonal to the direction of Ra1 is defined as Ra2. For example, when Ra1 is the arithmetic average roughness in the rolling direction of the ferritic stainless steel foil, Ra2 is the arithmetic average roughness in the width direction of the ferritic stainless steel foil.

As a result of the detailed study by the inventors, it has been revealed that when Ra1 or Ra2 is less than 0.03 μm, repeated charge and discharge may cause the capacity retention rate of the cell to decrease progressively, and that when Ra1 or Ra2 is more than 0.30 μm, the capacity retention rate may decrease abruptly during repeated charge and discharge. That is, as a result of the detailed study by the inventors, when a ferritic stainless steel foil that has 0.40 to 0.52° in terms of the half width Fw of the peak for the {110} plane is used as the base material for the steel foil for a current collector of an all-solid-state secondary cell, it has been revealed that, provided that both Ra1 and Ra2 satisfy 0.03 to 0.30 μm, it is possible to obtain an all-solid-state secondary cell that is not only less susceptible to buckling or bending but also has excellent cycle performance. The inventors presume that the reason for this is as follows.

First, when the all-solid-state secondary cell is to be produced with a steel foil for a current collector using a ferritic stainless steel foil as the base material, a thin film as typified by an active material layer is formed by deposition on the surface of the steel foil. To form the thin film, a vacuum film forming method as typified by a sputtering method and an electron beam deposition method may be used. For the all-solid-state secondary cell, by using the vacuum film forming method, the thin film deposited on the surface of the steel foil is formed into a highly thin and uniform film. As a result, in the all-solid-state secondary cell, it is likely that the surface roughness of the ferritic stainless steel foil, which is the base material, and the surface roughness of the thin film such as the active material layer are substantially the same extent.

Furthermore, in the all-solid-state secondary cell, the oxidation-reduction reaction of metal occurs during charge and discharge, which may lead to a reaction of a part of metal at this time. In this case, the reacted metal may grow into the shape of dendrite, causing a short circuit of the cell. In addition, a too large surface roughness of the ferritic stainless steel foil results in a large surface roughness of the thin film (such as an active material layer and an electrolyte layer) deposited on the surface of the steel foil. In this case, shapes of an interface between the steel foil for a current collector and the thin film and an interface between the thin films are complicated, which tends to induce a reaction of metal and dendrite growth. That is, as the surface roughness of the ferritic stainless steel foil, which is the base material for the current collector, a short circuit may likely to occur during charge and discharge. The inventors presume that an abrupt reduction in the capacity retention rate may thus occur during repeated charge and discharge.

On the other hand, a too small surface roughness of the ferritic stainless steel foil results in a too small surface roughness of the thin film deposited on the surface of the steel foil. In this case, an interface between the steel foil for a current collector and the thin film and an interface between the thin films become too smooth. As a result, the adherence of the thin film decreases, which may be likely to cause detachment of the thin film due to volume expansion and shrinkage of the active material layer or the like along with charge and discharge. The inventors presume that the charge-discharge capacity of the cell may thus decrease progressively due to repeated charge and discharge.

In view of a mechanism as described above, the inventors presume that when a ferritic stainless steel foil that has 0.40 to 0.52° in terms of the half width Fw of the peak for the {110} plane is to be used as the base material for the steel foil for a current collector of the all-solid-state secondary cell, provided that both Ra1 and Ra2 satisfy 0.03 to 0.30 μm, it is possible to obtain an all-solid-state secondary cell that is less susceptible to buckling or bending and also has excellent cycle performance even subjected to heat treatment at about 700°C after the active material layer is formed on the surface. Note that it may be possible that, through a mechanism different from the mechanism described above, a steel foil for a current collector that satisfies the configuration of the embodiment may be less susceptible to buckling or bending even subjected to heat treatment at about 700°C after the active material layer is formed on the surface, and in an all-solid-state secondary cell that incorporates the steel foil for a current collector, an excellent cycle performance may be obtained. However, when a ferritic stainless steel foil that has 0.40 to 0.52° in terms of the half width Fw of the peak for the {110} plane is to be used as the base material for a steel foil for a current collector of an all-solid-state secondary cell, it has been proved according to Example described later that provided that both Ra1 and Ra2 satisfy 0.03 to 0.30 $\mu$m, it is possible to obtain an all-solid-state secondary cell that is less susceptible to buckling or bending and also has excellent cycle performance even subjected to heat treatment at about 700°C after the active material layer is formed on the surface.

Here, in the case in which the mechanism in which a short circuit is likely to occur during charge and discharge of the all-solid-state secondary cell when Ra1 or Ra2 is more than 0.30 $\mu$m is as described above, it is considered that a short circuit is more likely to occur in a location where irregularities are locally large in the surface of the steel foil. Accordingly, it may be possible that, as a contribution to the likelihood of a short circuit in the mechanism, the maximum roughness Rz may be dominant among parameters of the surface roughness. However, in the ferritic stainless steel foil according to the embodiment, a similar trend is observed in both the arithmetic average roughness Ra and the maximum roughness Rz. Accordingly, in the embodiment, as indicators for the adherence and the short circuit tolerance, the arithmetic average roughnesses Ra1 and Ra2 in two directions that are perpendicular to each other are used.

In the surface of ferritic stainless steel foil according to the embodiment, further preferable lower limits of Ra1 and Ra2 are 0.04 $\mu$m, and further preferably 0.05 $\mu$m. In the surface of ferritic stainless steel foil according to the embodiment, further preferable upper limits of Ra1 and Ra2 are 0.29 $\mu$m, and further preferably 0.28 $\mu$m.

In the embodiment, measurements of Ra1 and Ra2 in the surface of the ferritic stainless steel foil can be taken in a way described below. First, a test specimen is cut out from the ferritic stainless steel foil according to the embodiment and is fixed to a glass substrate. Arbitrary 3 locations are specified from the surface of the fixed test specimen, and these locations are defined as measurement locations. In each measurement location, an arbitrary direction is specified as "direction 1", and the direction orthogonal to the direction 1 is specified as "direction 2". Preferably, the direction 1 is a direction in parallel to the rolling direction of the ferritic stainless steel foil. However, there may be a case in which even those skilled in the art cannot identify the rolling direction of the ferritic stainless steel foil. In such a case, the direction in which measurements of the arithmetic average roughness are taken may not be the direction in parallel to the rolling direction.

In each measurement location, for each of the direction 1 and the direction 2, measurements of the arithmetic average roughness are taken in compliant with a method defined in JIS B 0601 (2001) and defined as Ra1 ($\mu$m) and Ra2 ($\mu$m). The roughness tester used to measure the arithmetic average roughness may be, for example, the surface roughness measuring instrument Surftest SJ-301 (trademark) made by Mitutoyo Corporation, which is a contact roughness tester. Specifically, conditions for calculating a roughness curve are as follows.

measurement force : 0.75 mN
stylus tip shape (when a contact roughness tester is used) : 2 $\mu$mR60°
cutoff value $\lambda$c : 0.25 mm
cutoff value $\lambda$s : 2.5 $\mu$m
number of zones : 5
measurement speed : 0.25 mm/sec
reference length : 0.25 mm
evaluation length : 1.25 mm

[Resin coating]

The steel foil for a current collector according to the embodiment may include a resin coating formed on the surface of the ferritic stainless steel foil. By forming a resin coating on the surface of the ferritic stainless steel foil, the insulation, the heat resistance, and the flatness of the steel foil for a current collector can be increased. Note that, in the embodiment, the resin coating may be formed on both surfaces of the ferritic stainless steel foil, may be formed on one surface, or may not be formed at all. Furthermore, the resin coating may be formed on a part of one surface of the ferritic stainless steel foil or may be formed entirely.

For example, the resin coating may be, but not particularly limited to, an inorganic-organic hybrid resin coating. The inorganic-organic hybrid resin coating refers to a resin coating formed from inorganic components and organic components in a composite manner. Specifically, the inorganic-organic hybrid resin coating may be a siloxane coating that has an inorganic backbone with siloxane bonds developed in a three dimensional network structure as a main skeleton, and at least one of bridging oxygen atoms in the backbone is substituted with organic groups and/or hydrogen atoms. That is, in the embodiment, it is possible to use, as a resin coating, a siloxane coating in which the oxygen concentration [O] (mol/L) and the silicon concentration [Si] (mol/L) in the coating satisfy 1<[O]/[Si]<2.

As described above, as the steel foil for a current collector is thinner, the energy density of the cell incorporating the electrode produced with the steel foil for a current collector increases. Accordingly, in the embodiment, when the resin coating is to be formed, the thickness of the resin coating is preferably thin. On the other hand, if the thickness of the resin coating is too small, the insulation, the heat resistance, and the flatness described above may not satisfactorily be obtained. Accordingly, in the embodiment, when the resin coating is to be formed, the thickness of the resin coating is preferably 0.3 to 5.0 $\mu$m.

[Other configurations]

The steel foil for a current collector according to the embodiment may include any other components than the ferritic stainless steel foil and the resin coating. For example, any other layer than the resin coating may be included on the surface of the steel foil for a current collector. In this case, it is preferable that such a layer other than the resin coating is conductive.

[Cell]

As described above, the steel foil for a current collector according to the embodiment can be used as an electrode for a cell by forming an active material layer on or above the surface thereof. Here, the steel foil for a current collector according to the embodiment may be used as a steel foil for a positive electrode current collector, or may be used as a steel foil for a negative electrode current collector. Note that the steel foil for a current collector according to the embodiment is not limited to a particular cell for which it is used. The steel foil for a current collector according to the embodiment can be used as an electrode for an all-solid-state secondary cell, can be used as an electrode for a nonaqueous electrolyte secondary cell, can be used as an electrode for an aqueous electrolyte secondary cell, or can be used as an electrode for a primary cell.

[All-solid-state secondary cell]

Preferably, the cell according to the embodiment is an all-solid-state secondary cell. When the cell according to the embodiment is an all-solid-state secondary cell, the all-solid-state secondary cell includes the steel foil for a current collector according to the embodiment, and an active material layer, a solid electrolyte layer, and a current collector layer.
The all-solid-state secondary cell according to the embodiment includes an active material layer. Here, the active material layer is not particularly limited and may be obtained from a thin film including a well-known active material. When the active material layer is a positive electrode active material layer, the positive electrode active material may be, for example, lithium cobalt oxide, may be ternary material, may be lithium manganate, may be lithium iron phosphate, or may be a high-nickel material. When the active material layer is a negative electrode active material layer, the negative electrode active material may be, for example, a carbon-based material as typified by graphite, may be an alloy material as typified by CuSn alloy or NiTiSi alloy, or may be an Si-based material as typified by SiO. Furthermore, in the all-solid-state secondary cell, there may be a case in which no negative electrode active material layer is formed. In this case, the active material layer refers to a positive electrode active material layer.
More specifically, when the steel foil for a current collector according to the embodiment is used for the all-solid-state lithium-ion secondary cell, it is possible to use, as the positive electrode active material, for example, composite oxide such as molybdenum oxide (MoOs), vanadium oxide ($V_2O_3$), lithium manganese oxide ($LiMn_2O_4$), lithium cobalt oxide ($LiCoO_2$), solid solution oxide ($Li_2MnO_3$-$LiMO_2$ (M=Co, Ni and the like)), lithium-manganese-nickel oxide ($LiNi_{1/3}Mn_{1/3}Co_{1/3}O_2$), olivine-type lithium iron phosphorus oxide ($LiFePO_4$), tungsten oxide ($WO_3$).
Here, in the embodiment, a method for forming the active material layer by using the active material illustrated above is not particularly limited. As a method for forming the active material layer, for example, a vacuum film forming method as typified by a sputtering method and an electron beam deposition method is used. Furthermore, as described above, for the all-solid-state secondary cell, after the active material layer is formed on the surface of the current collector, the active material may be crystallized. In this case, after the active material layer is formed on or above the steel foil for a current collector, heat treatment is performed at a high temperature of about 700°C, for example. The steel foil for a current collector according to the embodiment is less susceptible to buckling or bending even subjected to heat treatment at about 700°C after the active material layer is formed.
The all-solid-state secondary cell according to the embodiment further includes a solid electrolyte layer. The solid electrolyte layer is not particularly limited and may be obtained from a thin film including well-known solid electrolyte. Specifically, the all-solid-state secondary cell according to the embodiment is a thin film all-solid-state lithium-ion secondary cell, it is possible to use, as solid electrolyte, for example, $Li_7Al_{0.1}La_3Zr_2O_{12}$, $Li_{1.3}Al_{0.3}Ti_{1.7}(PO_4)_3$, (Li, La)$TiO_3$, $Li_5La_3Ti_2O_{12}$, $Li_{3.09}BO_{2.53}N_{0.52}$, and $Li_3PON_4$.
The all-solid-state secondary cell according to the embodiment further includes a current collector layer. As described above, the steel foil for a current collector according to the embodiment may be used as a positive electrode steel foil for a current collector or may be used as a negative electrode steel foil for a current collector. When the steel foil for a current collector according to the embodiment is used as the positive electrode steel foil for a current collector, the current collector layer is used as the negative electrode current collector. When the steel foil for a current collector according to the embodiment is used as the negative electrode steel foil for a current collector, the current collector layer is used as the positive electrode current collector.

As a material for use in the current collector layer in the embodiment, it is possible to use a well-known material selected from the viewpoint of electrochemical corrosion resistance and volume specific resistance values at an operating potential of the positive electrode and the negative electrode. When the current collector layer is used as the positive electrode current collector, it is possible to use, as the current collector layer, for example, platinum (Pt), gold (Au), aluminum (Al), and titanium nitride (TiN). When the current collector layer is used as the negative electrode current collector, it is possible to use, as the current collector layer, for example, platinum (Pt), gold (Au), silver (Ag), copper (Cu), nickel (Ni), and titanium nitride (TiN).

The all-solid-state secondary cell according to the embodiment may include any other components than the steel foil for a current collector according to the embodiment, the active material layer, the solid electrolyte layer, and the current collector layer. For example, a conductor layer may be formed between the steel foil for a current collector according to the embodiment and the active material layer. That is, in the all-solid-state secondary cell according to the embodiment, the conductor layer is an optional component. In the case in which the conductor layer is formed between the steel foil for a current collector and the active material layer, diffusion between the steel foil for a current collector and the active material layer can be suppressed. Furthermore, in this case, the interface resistance between the steel foil for a current collector and the active material layer can be suppressed.

In the all-solid-state secondary cell according to the embodiment, when the conductor layer is to be formed, it is possible to use, as a material for use in the conductor layer, a well-known material selected from the viewpoint of electrochemical corrosion resistance and volume specific resistance values at an operating potential of the positive electrode and the negative electrode. As the conductor layer on the positive electrode side, it is possible to use, for example, platinum (Pt), gold (Au), aluminum (Al), and titanium nitride (TiN). As the conductor layer on the negative electrode side, it is possible to use, for example, platinum (Pt), gold (Au), silver (Ag), copper (Cu), nickel (Ni), and titanium nitride (TiN).

The all-solid-state secondary cell according to the embodiment may further include any other components than the steel foil for a current collector according to the embodiment, the conductor layer, the active material layer, the solid electrolyte layer, and the current collector layer. In this case, for example, a protective layer for protecting the active material layer may be included or a case for covering the entire cell may be included. Note that when the protective layer or the case is included, the protective layer or the case is preferably non-conductive.

[Buckling]

The steel foil for a current collector according to the embodiment is less susceptible to buckling or bending by heat treatment at a temperature that is high enough to crystallize the active material after the active material layer is formed. In the embodiment, a less likelihood of or less susceptibility to buckling can be evaluated in a way described below.

The active material layer is formed by using lithium cobalt oxide ($LiCoO_2$) as the active material on the surface of the steel foil for a current collector according to the embodiment. Note that the size of the steel foil for a current collector is, for example, 300 to 600 mm in the width direction of the steel foil. Loaded with a tension by using a transfer roll that has a diameter of 70 mm or more, the steel foil for a current collector on which the active material is formed by a vacuum film forming method is subjected to heat treatment at 700°C for 20 minutes. The loaded tension is, for example, 5 to 50 N/mm$^2$ in the rolling direction of the steel foil. Furthermore, the conveyance speed during the heat treatment is 0.1 to 30.0 m/sec. The steel foil for a current collector after the heat treatment is visually checked whether or not there is buckling. In the specification, buckling refers to irregularities formed on the surface of the steel foil for a current collector. When no buckling is confirmed on the steel foil for a current collector as a result of the visual check, it is determined that buckling is less likely to occur.

[Bending]

The steel foil for a current collector according to the embodiment is less susceptible to buckling or bending by heat treatment at a temperature that is high enough to crystallize the active material after the active material layer is formed. In the embodiment, a less likelihood of or less susceptibility to bending can be evaluated in a way described below.

Test specimens are prepared from the steel foil for a current collector according to the embodiment. The size of the test specimen is 30 mm in the rolling direction of the ferritic stainless steel foil, and 150 mm in the width direction. The active material layer is formed on the surface of the test specimen by using lithium cobalt oxide ($LiCoO_2$) as the active material and is subjected to heat treatment at 700°C for 20 minutes. After the heat treatment, one end of the test specimen in the longitudinal direction is fixed to the upper end of an angle plate and the test specimen is arranged such that the test specimen comes into contact with the angle plate. The distance between the other end (lower end) of the test specimen in the longitudinal direction and the angle plate is measured with a ruler, which is defined as the "amount of warping" of the test specimen. In the embodiment, when the amount of warping is 5 mm or less, it is determined that bending is less likely to occur. Further in the embodiment, when the amount of warping is 3 mm or less it is determined that bending is highly less likely to occur.

[Cycle performance]

With the steel foil for a current collector according to the embodiment, it is preferable that an all-solid-state secondary cell that has excellent cycle performance can be obtained. In the embodiment, whether the all-solid-state secondary cell has excellent cycle performance can be evaluated in a way described below.

First, a replica that replicates the all-solid-state secondary cell is prepared. Specifically, a test specimen is cut out from the steel foil for a current collector according to the embodiment. A positive electrode conductor layer is formed on the cut-out test specimen by sputtering. Sputtering is performed by using, for example, a DC (Direct Current) sputter-type apparatus under conditions that the material of the target is Pt, without heating, under an Ar atmosphere, such that the film thickness of 1.0 $\mu$m is achieved.

A positive electrode active material layer is formed by sputtering on the formed positive electrode conductor layer. Sputtering is performed by using, for example, an RF (Radio Frequency) sputter-type apparatus such that the film thickness of lithium cobalt oxide ($LiCoO_2$) of 0.45 $\mu$m is achieved.

The test specimen with the positive electrode active material layer formed thereon is subjected to annealing treatment. The annealing treatment is performed at a temperate of 600°C. A solid electrolyte layer is formed by sputtering on the positive electrode active material layer of the test specimen subjected to the annealing treatment. Sputtering is performed by using, for example, RF sputter-type apparatus such that the film thickness of lithium phosphorus oxynitride ($Li_3PON_4$) of 1.4 $\mu$m is achieved.

A negative electrode current collector layer is formed by sputtering on the formed solid electrolyte layer. Sputtering is performed by using, for example, a DC sputter-type apparatus such that the film thickness of copper (Cu) of 1.0 $\mu$m is achieved. A protective layer is formed by sputtering on the formed negative electrode current collector layer. Sputtering is performed by using, for example, an RF sputter-type apparatus such that the film thickness of silicon dioxide ($SiO_2$) of 0.05 to 1.0 $\mu$m is achieved. In the embodiment, a replica that replicates the all-solid-state secondary cell is prepared as described above.

The cycle performance are evaluated by using the prepared replica. Specifically, the replica is subjected to constant current charge at C-rate of 0.1C from the rest potential up to 4.2V. Thereafter, constant voltage charge at 4.2V is performed for 20 hours. The replica charged in this way is subjected to constant current discharge at C-rate of 0.1C up to 3.0V. The discharge capacity from the constant current discharge is defined as the initial discharge capacity Qd1 (mAh).

Here, the constant current charge of 0.1C performed up to 4.2V, the constant voltage charge at 4.2V performed for 20 hours, and the constant current discharge of 0.1C performed up to 3.0V constitute one cycle. The replica on which the initial discharge capacity Qd1 (mAh) is measured is further subjected to 9 cycles of charge and discharge. When the initial discharge capacity Qd1 (mAh) is of the first cycle, the discharge capacity by constant current discharge at 10th cycle is defined as the discharge capacity Qd10 (mAh) at 10th cycle. In the embodiment, the capacity retention rate is defined by the following Formula (1).

$$\text{Capacity retention rate (\%)} = 100 \times Qd10 \, / \, Qd1 \qquad (1)$$

[Production method for steel foil for current collector]

An example of a production method for the steel foil for a current collector according to the embodiment will be described. The production method for described below is only an example of producing the steel foil for a current collector according to the embodiment and the production method for the steel foil for a current collector according to the embodiment may be any other production method than the production method described below. However, the production method described below is a preferable example of a production method for the steel foil for a current collector according to the embodiment. The production method for the steel foil for a current collector according to the embodiment includes an intermediate steel material preparation process, a final cold rolling process, and a heat treatment process.

[Intermediate steel material preparation process]

In the intermediate steel material preparation process, an intermediate steel material that is the base material for the steel foil for a current collector and that has a chemical composition similar to the ferritic stainless steel foil is prepared. That is, the intermediate steel material is an intermediate product for producing the ferritic stainless steel foil according to the embodiment and refers to a steel sheet that has a thickness of several tens to hundreds $\mu$m. For example, the intermediate steel material is a cold rolled coil obtained by cold rolling a hot rolled coil. The intermediate steel material may be prepared through in-house production or may be prepared by purchasing from a third party. That is, the process for preparing the intermediate steel material is not particularly limited.

When the intermediate steel material is to be produced, it is produced in a way described below, for example. Molten steel that has a desired chemical composition is produced. The molten steel is used to produce a cast piece (slab, bloom, or billet) by a continuous casting method. The molten steel may be used to produce a steel ingot (ingot) by an ingot-making method. The slab, bloom, or ingot may be subjected to blooming to produce a billet as necessary.

The produced cast piece or steel ingot (slab, bloom, billet, or ingot) is subjected to hot working and cold rolling to produce a steel sheet that has a thickness of several tens to hundreds $\mu$m. The method of hot working is not particularly limited, and any well-known method may be used. The hot working is, for example, hot rolling. When the intermediate steel material is to be produced by hot rolling, it can be produced in a way described below, for example.

After the produced cast piece or steel ingot is heated, rough rolling and finish rolling are performed. At this time, conditions for hot rolling are not particularly limited, and any well-known conditions may be set as appropriate. The hot rolled intermediate steel material may be repeatedly subjected to cold rolling and annealing processes as necessary. The hot rolled intermediate steel material may be further subjected to skin pass rolling as necessary. The hot rolled and/or cold rolled intermediate steel material is further subjected to an annealing process. In the processes described above, the intermediate steel material according to the embodiment is prepared.

[Final cold rolling process]

In the final cold rolling process, the intermediate steel material prepared in the intermediate steel material preparation process is subjected to cold rolling. In the embodiment, cold rolling can be performed by using a well-known apparatus, which is not particularly limited. For example, a continuous rolling mill provided with a plurality of cold rolling stands may be used.

In the final cold rolling process according to the embodiment, the surface roughness of a work roll surface is preferably 0.03 to 0.30 $\mu$m in terms of arithmetic average roughness Ra. If the surface roughness of the work roll surface is too small, the surface roughness of a produced ferritic stainless steel foil may become excessively small. On the other hand, if the surface roughness of the work roll surface is too large, the surface roughness of a produced ferritic stainless steel foil may become excessively large. Accordingly, in the final cold rolling process according to the embodiment, the arithmetic average roughness Ra in the work roll surface is preferably 0.03 to 0.30 $\mu$m.

Further in the final cold rolling process according to the embodiment, the rolling reduction R is preferably 35 to 98%. Here, the rolling reduction R in the final cold rolling process refers to a reduction rate (%) of the thickness of the intermediate steel material after the final cold rolling process relative to the thickness before the final cold rolling process. That is, the rolling reduction R in the final cold rolling process is defined by the following Formula (A).

R (%) = [{ (thickness of intermediate steel material before final cold rolling process) - (thickness of intermediate steel material after final cold rolling process)}] / (thickness of intermediate steel material before final cold rolling process) $\times$ 100 (A)      (A)

If the rolling reduction R in the final cold rolling process is too low, the amount of energy of strain introduced in the intermediate steel material by cold rolling is reduced. In this case, in a heat treatment process described later, a heat treatment temperature required for relieving the strain increases. That is, if the rolling reduction R in the final cold rolling process is too low and the heat treatment temperature in the heat treatment process described later is too low, the half width Fw of the {110} plane may become excessively high in the ferritic stainless steel foil of the produced steel foil for a current collector. As a result, buckling is likely to occur in the steel foil for a current collector by heat treatment at a temperature that is high enough to crystallize the active material.

Further in the final cold rolling process, due to the rolling down, the surface shape of the work roll is transferred to the foil strip surface accordingly, so that irregularities formed on the surface of the intermediate steel material vary. Accordingly, if the rolling reduction in the final cold rolling process is too low, the surface roughness of the foil strip surface cannot be controlled, so that irregularities formed on the surface of the intermediate steel material still remain, which may lead to an excessively large surface roughness. In this case, in the surface of the produced ferritic stainless steel foil, Ra1 and/or Ra2 may exceed 0.30 $\mu$m. In this case, the cycle performance of the all-solid-state secondary cell produced with the steel foil for a current collector using the ferritic stainless steel foil as the base material decrease.

On the other hand, if the rolling reduction R in the final cold rolling process is too high, the amount of strain introduced in the intermediate steel material by cold rolling becomes excessively high. In this case, there is a concern that breakage may occur at an end of the intermediate steel material. Accordingly, in the final cold rolling process according to the embodiment, a preferable rolling reduction R is 35 to 98%. A further preferable lower limit of rolling reduction R in the final cold rolling process is 40%, and further preferably 45%. A further preferable upper limit of the rolling reduction R in the final cold rolling process is 96%, and further preferably 95%.

In the final cold rolling process according to the embodiment, any other processes than cold rolling may be performed. For example, the intermediate steel material may be subjected to slitting to process the intermediate steel material into any sizes. In this case, in the final cold rolling process, slitting may be performed after cold rolling, cold rolling may be performed after slitting, or slitting may be performed between cold rolling and cold rolling.

[Heat treatment process]

In the heat treatment process, the intermediate steel material after the final cold rolling process is subjected to heat treatment. In the embodiment, heat treatment can be performed by passing the sheet through a well-known heat treatment furnace. In the embodiment, the atmosphere during the heat treatment process is preferably an inert gas atmosphere such as of nitrogen or a reducing gas atmosphere such as of hydrogen.

A preferable heat treatment temperature in the heat treatment process is 350 to 700°C. If the heat treatment temperature is too low, it is not possible to sufficiently relieve strain from the intermediate steel material. As a result, the half width Fw of the {110} plane may become excessively high in the ferritic stainless steel foil of the produced steel foil for a current collector. In this case, buckling is likely to occur in the steel foil for a current collector by heat treatment at a temperature that is high enough to crystallize the active material. On the other hand, if the heat treatment temperature is too high, too much strain is relieved from the intermediate steel material. As a result, the half width Fw of the {110} plane may become excessively low in the ferritic stainless steel foil of the produced steel foil for a current collector. In this case, bending is likely to occur in the steel foil for a current collector by heat treatment at a temperature that is high enough to crystallize the active material.

In the embodiment, therefore, the heat treatment temperature in the heat treatment process is preferably 350 to 700°C. A further preferable lower limit of the heat treatment temperature is 400°C. A further preferable upper limit of the heat treatment temperature is 650°C. A further preferable heat treatment temperature is 350 to 550°C. In this case, in the ferritic stainless steel foil of the produced steel foil for a current collector, the half width Fw of the {110} plane is stably held in 0.45 to 0.52° even subjected to heat treatment at a temperature that is high enough to crystallize the active material, so that bending of the steel foil for a current collector is likely to be further suppressed.

Preferable heat treatment time in the heat treatment process is 1 to 400 seconds. If the heat treatment time is too short, strain cannot be relieved from the intermediate steel material sufficiently. As a result, the half width Fw of the {110} plane may become excessively large in the ferritic stainless steel foil of the produced steel foil for a current collector. In this case, buckling is likely to occur in the steel foil for a current collector by heat treatment at a temperature that is high enough to crystallize the active material. On the other hand, if the heat treatment time is too long, too much strain may be relieved from the intermediate steel material. As a result, the half width Fw of the {110} plane may become excessively low in the ferritic stainless steel foil of the produced steel foil for a current collector. In this case, bending is likely to occur in the steel foil for a current collector by heat treatment at a temperature that is high enough to crystallize the active material.

In the embodiment, therefore, the heat treatment time in the heat treatment process is preferably 1 to 400 seconds. A further preferable lower limit of the heat treatment time is 2 seconds, and further preferably 3 seconds. A further preferable upper limit of the heat treatment time is 300 seconds, and further preferably 250 seconds. Note that, in the specification, the heat treatment temperature in the heat treatment process refers to the temperature (°C) of a heat treatment furnace for performing heat treatment. Note that, in the specification, the heat treatment time in the heat treatment process refers to time (seconds) taken for the intermediate steel material to pass through the heat treatment furnace for performing the annealing process.

In the production process described above, the steel foil for a current collector according to the embodiment that has configurations described above can be produced. Note that the production process described above is only an example of a production method for the steel foil for a current collector according to the embodiment and the production method for the steel foil for a current collector according to the embodiment is not limited to the production method described above. Furthermore, in the production method for the steel foil for a current collector according to the embodiment, any processes described below may be performed. The processes described below are optional and may not be performed.

[Tension annealing process]

The production method for the steel foil for a current collector according to the embodiment may further include a tension annealing process after the final cold rolling process and before the heat treatment process. The tension annealing refers to performing an annealing process while tension is being applied. The intermediate steel material subjected to the tension annealing can maintain the flatness of the intermediate steel material by the tension.

When the tension annealing process is to be performed, a preferable annealing temperature is 350 to 450°C. If the annealing temperature is too low, the effect of the tension annealing may not satisfactorily be obtained. On the other hand, if the annealing temperature is too high, the introduced dislocation density decreases excessively in the microstructure of the intermediate steel material. As a result, in the produced ferritic stainless steel foil, the half width Fw of the peak for the {110} plane in an X-ray diffraction profile with CoKα rays may not be increased sufficiently. Accordingly, in the embodiment, when the tension annealing process is to be performed, the annealing temperature is preferably 350 to 450°C.

When the tension annealing process is to be performed, the annealing time is not particularly limited. For example, the annealing time is 1 to 10 seconds. Note that, in the specification, "annealing temperature" of the tension annealing refers to the temperature (°C) of a heat treatment furnace for performing the annealing process. Note that, in the specification, "annealing time" of the tension annealing refers to time (seconds) taken for the intermediate steel material to pass through a heat treatment furnace for performing the annealing process. Furthermore, when the tension annealing process is to be performed, tension applied to the intermediate steel material is not particularly limited.

[Resin coating forming process]

The production method for the steel foil for a current collector according to the embodiment may further include a resin coating forming process after the final cold rolling process and before the heat treatment process. As described above, by forming a resin coating on the surface of the ferritic stainless steel foil, the insulation, the heat resistance, and the flatness of the steel foil for a current collector can be increased.

When the resin coating forming process is to be performed, a resin coating is formed on the surface of the intermediate steel material subjected to cold rolling in the final cold rolling process. As described above, in the embodiment, the resin coating is, but not particularly limited to, an inorganic-organic hybrid resin coating, for example. The method for forming the resin coating is not particularly limited and may be any well-known method. For example, the resin coating may be performed by applying and drying a composition that includes components of the resin coating.

In addition, heat treatment may be performed for curing the resin coating as necessary. In this case, it is preferable that the resin coating is cured in the heat treatment process described above. When the resin coating is to be cured by heat treatment in the heat treatment process, it is possible in the heat treatment process to appropriately control strain in the ferritic stainless steel foil while at the same time the resin coating can be cured. In this case, the productivity can be increased.

[Production method for all-solid-state secondary cell]

The production method for the all-solid-state secondary cell is not particularly limited, and any well-known method can be used. As described above, the all-solid-state secondary cell according to the embodiment can be produced by depositing thin films of the active material layer and the solid electrolyte layer on or above the steel foil for a current collector according to the embodiment. Here, as the method for depositing thin films, for example, a vacuum film forming method as typified by a sputtering method and an electron beam deposition method is used.

When a sputtering method is used, the sputtering method is not particularly limited, and any well-known sputtering method can be selected to use as appropriate. For example, the sputtering method may be of a DC sputter type, may be of an RF sputter type, or may be of an ion beam sputter type.

The steel foil for a current collector according to the embodiment will now be described specifically with reference to Example. Note that Example described below is only an example for confirming the effect of the steel foil for a current collector according to the embodiment and is not intended to limit the present invention.

EXAMPLE

Intermediate steel materials with test numbers of thicknesses (μm) indicated in Table 1 are prepared. Note that any of the intermediate steel materials with the test numbers was an intermediate steel material made of the ferritic stainless steel corresponding to SUS444 defined in JIS G 4305 (2012). Furthermore, those used for any of the intermediate steel materials were subjected to the annealing process at 840 to 950°C for 3 to 30 seconds.

[Table 1]

Table 1

| Test Number | Thickness of intermediate steel material (μm) | Work roll | Rolling reduction (%) | Thickness of base material (μm) | Annealing process | Heat treatment temperature (°C) | Half width Fw (°) | Ra1 (μm) | Ra2 (μm) | Buckling | Bending | Cycle performance |
|---|---|---|---|---|---|---|---|---|---|---|---|---|
| 1 | 25 | C | 60 | 10 | - | 400 | 0.48 | 0.07 | 0.25 | E | E | E |
| 2 | 250 | C | 90 | 25 | - | 400 | 0.47 | 0.07 | 0.24 | E | E | E |
| 3 | 300 | C | 90 | 30 | - | 400 | 0.46 | 0.05 | 0.08 | E | E | E |
| 4 | 200 | C | 75 | 50 | - | 400 | 0.47 | 0.08 | 0.09 | E | E | E |
| 5 | 120 | C | 75 | 30 | - | 400 | 0.46 | 0.08 | 0.24 | E | E | E |
| 6 | 150 | B | 90 | 15 | TA | - | 0.49 | 0.04 | 0.06 | E | E | E |
| 7 | 250 | B | 90 | 25 | TA | 400 | 0.46 | 0.03 | 0.05 | E | E | E |
| 8 | 100 | C | 75 | 25 | TA | - | 0.49 | 0.08 | 0.07 | E | E | E |
| 9 | 250 | C | 90 | 25 | - | 600 | 0.43 | 0.06 | 0.15 | E | G | E |
| 10 | 250 | A | 90 | 25 | - | 700 | 0.42 | 0.01 | 0.03 | E | G | NA1 |
| 11 | 200 | A | 75 | 50 | - | 400 | 0.47 | 0.01 | 0.03 | E | E | NA1 |
| 12 | 250 | D | 90 | 25 | - | 700 | 0.41 | 0.13 | 0.44 | E | G | NA2 |
| 13 | 200 | D | 75 | 50 | - | 400 | 0.47 | 0.08 | 0.31 | E | E | NA2 |
| 14 | 200 | A | 75 | 50 | - | 400 | 0.46 | 0.02 | 0.02 | E | E | - |
| 15 | 250 | C | 90 | 25 | - | 800 | 0.39 | 0.06 | 0.06 | E | NA | - |
| 16 | 250 | C | 90 | 25 | BA | - | 0.38 | 0.07 | 0.16 | E | NA | - |
| 17 | 250 | C | 90 | 25 | BA | 400 | 0.37 | 0.07 | 0.07 | E | NA | - |
| 18 | 25 | C | 60 | 10 | - | - | 0.55 | 0.08 | 0.24 | NA | - | - |
| 19 | 250 | C | 90 | 25 | - | - | 0.54 | 0.07 | 0.14 | NA | - | - |
| 20 | 25 | C | 60 | 10 | - | 300 | 0.53 | 0.13 | 0.08 | NA | - | - |
| 21 | 14 | A | 30 | 10 | - | 400 | 0.53 | 0.01 | 0.02 | NA | - | - |

The intermediate steel materials with the test numbers were subjected to cold rolling by using work rolls. The work rolls used then are described in Table 1. In Table 1, the work roll that has less than 0.03 $\mu$m in terms of the arithmetic average roughness Ra of the roll surface is denoted as "A". In Table 1, the work roll that has 0.03 to less than 0.10 $\mu$m in terms of the arithmetic average roughness Ra of the roll surface is denoted as "B". In Table 1, the work roll that has 0.10 to less than 0.30 $\mu$m in terms of the arithmetic average roughness Ra of the roll surface is denoted as "C". In Table 1, the work roll that has 0.30 to less than 0.60 $\mu$m in terms of the arithmetic average roughness Ra of the roll surface is denoted as "D". In addition, the rolling reduction (%) in cold rolling was as described in Table 1.

In this way, base materials (ferritic stainless steel foils) of the base material thicknesses described in Table 1 ($\mu$m) were obtained. The base materials with some of the test numbers among the resultant base materials were subjected to annealing as described in the "annealing process" column. The base materials with test numbers 6 to 8 were subjected to tension annealing (in Table 1, denoted as "TA (Tension Annealing)"). In the Example, heat treatment at 400°C for 4 seconds was performed as the tension annealing. In addition, the base materials with test numbers 16 and 17 were subjected to bright annealing (in Table 1, denoted as "BA (Bright Annealing)"). The bright annealing refers to annealing that is performed under conditions that the ferritic stainless steel foil surface is not nitrided. In the Example, as bright annealing, with the concentration of nitrogen in the atmosphere being 0.1% or less, heat treatment at 950°C for 4 seconds was performed.

A composition for forming a siloxane resin coating was applied on one surface of each of the resultant base materials with test numbers. The base materials, on one surface of which the composition was applied, were subjected to heat treatment at heat treatment temperatures described in Table 1 for 20 to 300 seconds. Note that "-" in the "heat treatment temperature (°C)" column in Table 1 indicates that heat treatment was not performed. In the processes described above, the steel foils for a current collector according to the embodiment were produced.

[Evaluation test]

A half width Fw measurement test, a surface roughness measurement test, a buckling evaluation test, a bending evaluation test, and a cycle performance evaluation test were performed on the steel foils for a current collector with test numbers.

[Half width Fw measurement test]

The half width Fw measurement test was performed on the steel foils for a current collector with test numbers to determine the half width Fw of the {110} plane. Specifically, test specimens were prepared from the steel foils for a current collector with test numbers, and X-ray diffraction profiles were obtained by Grazing Incident X-ray Diffraction (GIXD). A surface on which no resin coating was formed in a test specimen was specified as an observation surface. In the Grazing Incident X-ray Diffraction (GIXD), the radiation source was CoK$\alpha$ ray, the tube voltage was 40 kV, and the tube current was 135 mA. Furthermore, a mirror was used to collimate a flux of X-rays. The solar slit was set to 5° on the incident side and 2.5° on the diffraction side. The incidence angle was defined into 12 conditions in the range of 1 to 25° such that 12 points of observation depths were obtained from an observation surface of a test specimen in the range of 0.19 to 4.60 $\mu$m.

At each observation point, the peak for the {110} plane is identified from the X-ray profile, and the half width is determined. The arithmetic average value of resultant 12 half widths was defined as the half width Fw of the {110} plane. An X-ray penetration depth t, which satisfies $\mu t=1$ where $\mu$ is a linear absorption coefficient, was determined, and in turn converted into a depth from the observation surface of the test specimen, which was used for the observation depth. For a mass absorption coefficient, 19.11Cr-1.77Mo-78.38Fe (mass%) was used. Furthermore, for the density of the ferritic stainless steel foil, 7.75 g/cm$^3$ was used. The resultant half width Fw (°) of the {110} plane for each of the steel foils for a current collector with test numbers is indicated in Table 1.

[Surface roughness measurement test]

The surface roughness measurement test was performed on the steel foils for a current collector with test numbers to determine arithmetic average roughnesses Ra1 and Ra2. Specifically, test specimens were prepared from the steel foils for a current collector with test numbers and were fixed to glass substrates. A surface on which a resin coating was formed in a test specimen was fixed to a glass substrate. Arbitrary 3 locations are specified from the test specimen fixed to a glass substrate, and these locations are defined as measurement locations. In the Example, an arbitrary direction (direction 1) was a direction in parallel to the rolling direction of the ferritic stainless steel foil. The direction orthogonal to the direction 1 (direction 2) was a direction in parallel to the width direction of the ferritic stainless steel foil.

In each measurement location, for each of the direction 1 and the direction 2, measurements of the arithmetic average roughness ($\mu$m) were taken in compliant with a method defined in JIS B 0601 (2001). The roughness tester used to measure the arithmetic average roughness was the surface roughness measuring instrument Surftest SJ-301 (trademark) made by Mitutoyo Corporation, which was a contact roughness tester. Furthermore, conditions for calculating a roughness curve were as follows.

    measurement force : 0.75 mN
    stylus tip shape (when a contact roughness tester is used) : 2 $\mu$mR60°
    cutoff value $\lambda$c : 0.25 mm
    cutoff value $\lambda$s : 2.5 $\mu$m
    number of zones : 5
    measurement speed : 0.25 mm/sec
    reference length : 0.25 mm
    evaluation length : 1.25 mm

The resultant arithmetic average roughness Ra1 ($\mu$m) in the direction 1 and the arithmetic average roughness Ra2 ($\mu$m) in the direction 2 are indicated in Table 1.

[Buckling evaluation test]

The buckling evaluation test was performed on the steel foils for a current collector with test numbers to evaluate whether or not there was buckling. Specifically, an active material layer was formed by vapor deposition on a surface on which the siloxane resin coating is not formed of each of the steel foils for a current collector with test numbers. In the Example, lithium cobalt oxide (LiCoO$_2$) was used as the active material. Note that, in each test number, the size of the steel foil for a current collector was 300 to 600 mm in the width direction of the steel foil. Loaded with a tension by using a transfer roll that has a diameter of 70 mm, the steel foil for a current collector with the active material applied thereon was subjected to heat treatment at 700°C for 20 minutes. Note that the loaded tension was 5 to 50 N/mm$^2$ in the rolling direction of the steel foil. In addition, the conveyance speed during heat treatment was 0.1 to 30.0 m/sec.
For the heat-treated steel foils for a current collector with test numbers, whether or not there was buckling was visually checked. More specifically, for the steel foil for a current collector for each test number, when no striped irregularity extending in the rolling direction of the steel foil was confirmed, it was determined that buckling was less likely to occur (in Table 1, denoted as "E (Excellent)"). On the other hand, for the steel foil for a current collector for each test number, when striped irregularities extending in the rolling direction of the steel foil were formed at an interval of several mm to several tens mm, it was determined that buckling was likely to occur (in Table 1, denoted as "NA (Not Acceptable)").

[Bending evaluation test]

The bending evaluation test was performed on the steel foils for a current collector with test numbers to evaluate whether or not there was bending. In the Example, the bending evaluation test was performed on the steel foils for a current collector of the test numbers for which it was determined that buckling was less likely to occur in the buckling evaluation test. Specifically, test specimens for evaluating bending were prepared from the steel foils for a current collector with test numbers. The test specimen was 30 mm in the rolling direction of the steel foil and 150 mm in the width direction. An active material layer was formed on the surface of the test specimen by vapor deposition. In the Example, lithium cobalt oxide (LiCoO$_2$) was used as the active material. The test specimen with the active material layer formed thereon was subjected to heat treatment at 700°C for 20 minutes. One end of the test specimen after the heat treatment in the longitudinal direction was fixed to the upper end of an angle plate, and the test specimen was arranged such that the test specimen comes into contact with the angle plate.
The distance between the other end (lower end) in the longitudinal direction of the test specimen and the angle plate was measured with a ruler, which was defined as the "amount of warping" of the test specimen. For the steel foil for a current collector for each test number, when the amount of warping was 5 mm or less, it was determined that bending was less likely to occur (in Table 1, denoted as "G (Good)"). For the steel foil for a current collector for each test number, when the amount of warping was 3 mm or less, it is determined that bending was highly less likely to occur (in Table 1, denoted as "E (Excellent)"). On the other hand, for the steel foil for a current collector for each test number, when the amount of warping was more than 5 mm, it was determined that bending was likely to occur (in Table 1, denoted as "NA (Not Acceptable)").

[Cycle performance evaluation test]

The cycle performance evaluation test was performed on the steel foils for a current collector with test numbers to evaluate cycle performance. In the Example, the cycle performance evaluation test was performed on the steel foils for a current collector of the test numbers for which it was determined that buckling is less likely to occur in the buckling evaluation test and it was determined that bending is less likely to occur in the bending evaluation test. Specifically, replicas of the all-solid-state secondary cell for evaluating cycle performance were prepared from the steel foils for a current collector with test numbers.

The replica was produced in a way described below. First, the steel foil is cut into a test specimen. A positive electrode conductor layer was formed on the surface of the test specimen by performing sputtering with a DC sputter-type apparatus. At this time, sputtering was performed under conditions that the material of the target was Pt, without heating, under an Ar atmosphere, such that the film thickness of 1.0 $\mu$m was achieved. A positive electrode active material layer was formed on the formed positive electrode conductor layer of the test specimen by performing sputtering with an RF sputter-type apparatus. The active material of the positive electrode active material layer was lithium cobalt oxide ($LiCoO_2$), and the film thickness of the positive electrode active material layer was 0.45 $\mu$m. Furthermore, the test specimen with the positive electrode active material layer formed thereon was subjected to annealing treatment for heat treatment at 600°C.

A solid electrolyte layer was formed on the positive electrode active material layer of the test specimen subjected to annealing treatment by performing sputtering with an RF sputter-type apparatus. The electrolyte of the solid electrolyte layer was lithium phosphorus oxynitride ($Li_3PON_4$), and the film thickness of the solid electrolyte layer was 1.4 $\mu$m. A negative electrode current collector layer was formed on the formed solid electrolyte layer of the test specimen by performing sputtering with a DC sputter-type apparatus. The conductive material of the negative electrode current collector layer was copper (Cu), and the film thickness of the negative electrode current collector layer was 1.0 $\mu$m. A protective layer was formed on the formed negative electrode current collector layer of the test specimen by performing sputtering with an RF sputter-type apparatus. The protective layer was mainly of silicon oxide ($SiO_2$), and the film thickness of the protective layer was 0.05 to 1.0 $\mu$m. The replicas prepared as described above were used to evaluate cycle performance for each test number.

Specifically, the replica for each test number was subjected to constant current charge at C-rate of 0.1C from the rest potential up to 4.2V. Thereafter, constant voltage charge at 4.2V was performed for 20 hours. The replica charged in this way was subjected to constant current discharge at C-rate of 0.1C up to 3.0V. In the Example, the discharge capacity from the constant current discharge is defined as the initial discharge capacity Qd1 (mAh).

Here, in the Example, the constant current charge of 0.1C performed up to 4.2V, the constant voltage charge at 4.2V performed for 20 hours, and the constant current discharge of 0.1C performed up to 3.0V constituted one cycle. The replica on which the initial discharge capacity Qd1 (mAh) is measured is further subjected to 9 cycles of charge and discharge. In the Example, when the initial discharge capacity Qd1 (mAh) was of the first cycle, the discharge capacity by constant current discharge at 10th cycle was defined as the discharge capacity Qd10 (mAh) at 10th cycle. Further in the Example, the capacity retention rate was defined by the following Formula (1).

$$\text{Capacity retention rate } (\%) = 100 \times \text{Qd10} / \text{Qd1} \qquad (1)$$

Further in the Example, the resultant capacity retention rate (%) for each test number was evaluated by using a relative value. Specifically, by using the capacity retention rate (%) of the test number 14 as a reference value, the capacity retention rate (%) for each test number was relatively evaluated. It was determined for the steel foil for a current collector for each test number that it has excellent cycle performance (in Table 1, denoted as "E (Excellent)"), when the capacity retention rate is larger than the reference value. On the other hand, it was determined for the steel foil for a current collector for each test number that it does not have excellent cycle performance (in Table 1, denoted as "NA1 (Not Acceptable 1)"), when the capacity retention rate is as much as the reference value. Furthermore, it was also determined for the steel foil for a current collector for each test number that it does not have excellent cycle performance (in Table 1, denoted as "NA2 (Not Acceptable 2)"), when the capacity retention rate is smaller than the reference value.

[Evaluation results]

The steel foils for a current collector of the test numbers 1 to 14 satisfied 0.40 to 0.52° in terms of the half width Fw of the {110} plane of the ferritic stainless steel foil. As a result, in the buckling evaluation test, it was determined that buckling was less likely to occur. Further as a result, in the bending evaluation test, the amount of warping was 5 mm or less, so that it was determined that bending was less likely to occur. That is, these steel foils for a current collector were less susceptible to buckling or bending by heat treatment at a temperature that was high enough to crystallize the active material after the active material layer was formed.

Furthermore, the steel foils for a current collector of test numbers 1 to 9 satisfied 0.03 to 0.30 $\mu$m in terms of both the arithmetic average roughness Ra1 in the rolling direction (direction 1) and the arithmetic average roughness Ra2 in the width direction (direction 2). As a result, in the cycle performance evaluation test, these steel foils had larger capacity retention rates than the reference value and had excellent cycle performance. That is, these steel foils for a current collector were less susceptible to buckling or bending by heat treatment at a temperature that was high enough to crystallize the active material after the active material layer was formed, and also had excellent cycle performance when used in all-solid-state secondary cells.

Furthermore, the steel foils for a current collector of the test numbers 1 to 8, 11, 13, and 14 satisfied 0.45 to 0.52° in terms of the half width Fw of the {110} plane of the ferritic stainless steel foil. As a result, in the bending evaluation test, the amount of warping was 3 mm or less, so that it was determined that bending was highly less likely to occur.

On the other hand, in the steel foil for a current collector of the test number 15, the heat treatment temperature of the heat treatment process was too high. As a result, in the steel foil for a current collector, the half width Fw of the {110} plane of the ferritic stainless steel foil was less than 0.40°. As a result, in the bending evaluation test, the amount of warping was more than 5 mm, so that it was determined that bending was likely to occur.

The steel foil for a current collector of the test number 16 was subjected to bright annealing before the heat treatment process. Furthermore, the heat treatment process was not performed. As a result, in the steel foil for a current collector, the half width Fw of the {110} plane of the ferritic stainless steel foil was less than 0.40°. As a result, in the bending evaluation test, the amount of warping was more than 5 mm, so that it was determined that bending was likely to occur.

The steel foil for a current collector of the test number 17 was subjected to bright annealing before the heat treatment process. As a result, in the steel foil for a current collector, the half width Fw of the {110} plane of the ferritic stainless steel foil was less than 0.40°. As a result, in the bending evaluation test, the amount of warping was more than 5 mm, so that it was determined that bending was likely to occur.

The steel foils for a current collector of the test numbers 18 and 19 were not subjected to heat treatment process. As a result, in the steel foils for a current collector, the half width Fw of the { 110} plane of the ferritic stainless steel foil was more than 0.52°. As a result, in the buckling evaluation test, it was determined that buckling was likely to occur.

In the steel foil for a current collector of the test number 20, the heat treatment temperature of the heat treatment process was too low. As a result, in the steel foil for a current collector, the half width Fw of the { 110} plane of the ferritic stainless steel foil was more than 0.52°. As a result, in the buckling evaluation test, it was determined that buckling was likely to occur.

In the steel foil for a current collector of the test number 21, the rolling reduction of the final cold rolling process was too low. As a result, in the steel foil for a current collector, the half width Fw of the { 110} plane of the ferritic stainless steel foil was more than 0.52°. As a result, in the buckling evaluation test, it was determined that buckling was likely to occur.

The embodiment of the present disclosure has been described above. However, the embodiment described above is illustrative only for carrying out the present disclosure. Therefore, the present disclosure is not limited to the embodiment described above, and modifications may be made to the embodiment described above as appropriate without departing from the spirit thereof for carrying out.

## Claims

1. A steel foil for a current collector, comprising:

    a ferritic stainless steel foil,
    wherein:
    in an X-ray diffraction profile with $CoK\alpha$ rays, a half width Fw of a peak for a {110} plane of the ferritic stainless steel foil is 0.40 to 0.52°.

2. The steel foil for a current collector according to claim 1, wherein:

    in a surface of the ferritic stainless steel foil,
    when an arithmetic average roughness in an arbitrary direction is defined as Ra1 and
    an arithmetic average roughness in a direction orthogonal to the arbitrary direction is defined as Ra2,
    both the Ra1 and the Ra2 are 0.03 to 0.30 $\mu$m.

3. The steel foil for a current collector according to claim 1, wherein:
    a thickness of the ferritic stainless steel foil is 5 to 60 $\mu$m.

4. The steel foil for a current collector according to claim 2, wherein:
    a thickness of the ferritic stainless steel foil is 5 to 60 $\mu$m.

5. The steel foil for a current collector according to claim 1, wherein:
    a resin coating is formed on a surface of the ferritic stainless steel foil.

6. The steel foil for a current collector according to claim 2, wherein:
a resin coating is formed on a surface of the ferritic stainless steel foil.

7. The steel foil for a current collector according to claim 3, wherein:
a resin coating is formed on a surface of the ferritic stainless steel foil.

8. The steel foil for a current collector according to claim 4, wherein:
a resin coating is formed on a surface of the ferritic stainless steel foil.

9. An all-solid-state secondary cell, comprising:

a steel foil for a current collector according to any one of claims 1 to 8;
an active material layer;
a solid electrolyte layer; and
a current collector layer.

## INTERNATIONAL SEARCH REPORT

| International application No. |
| --- |
| **PCT/JP2023/001441** |

**A. CLASSIFICATION OF SUBJECT MATTER**

*H01M 4/66*(2006.01)i; *C21D 9/46*(2006.01)i
FI: H01M4/66 A; C21D9/46 R

According to International Patent Classification (IPC) or to both national classification and IPC

**B. FIELDS SEARCHED**

Minimum documentation searched (classification system followed by classification symbols)

H01M4/66; C21D9/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-183254 A (JFE STEEL CORP.) 29 September 2014 (2014-09-29) paragraphs [0014], [0016], [0069]-[0070], table 2 | 1, 3 |
| A | | 2, 4-9 |
| X | JP 2012-138571 A (JFE STEEL CORP.) 19 July 2012 (2012-07-19) claims 6-7, 9, paragraph [0031]-[0034], tables 2, 3 | 1, 3 |
| A | | 2, 4-9 |
| A | WO 2005/101551 A1 (MATSUSHITA ELECTRIC INDUSTRIAL CO., LTD.) 27 October 2005 (2005-10-27) | 1-9 |
| A | JP 2021-12839 A (JFE STEEL CORP.) 04 February 2021 (2021-02-04) | 1-9 |
| A | JP 2007-138197 A (TDK CORP.) 07 June 2007 (2007-06-07) | 1-9 |
| A | JP 2021-11620 A (JFE STEEL CORP.) 04 February 2021 (2021-02-04) | 1-9 |
| A | JP 2003-178766 A (HITACHI MAXELL, LTD.) 27 June 2003 (2003-06-27) | 1-9 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 March 2023** | **20 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/001441** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2005-126808 A (NISSHIN STEEL CO., LTD.) 19 May 2005 (2005-05-19) | 1-9 |

Form PCT/ISA/210 (second sheet) (January 2015)

21

| Patent document cited in search report | | | Publication date (day/month/year) | Patent family member(s) | | | Publication date (day/month/year) |
|---|---|---|---|---|---|---|---|
| JP | 2014-183254 | A | 29 September 2014 | US paragraphs [0016], [0018], [0100]-[0104], table 2 | 2016/0049534 | A1 | |
| | | | | WO | 2014/148034 | A1 | |
| | | | | EP | 2953170 | A1 | |
| | | | | TW | 201446978 | A | |
| | | | | KR | 10-2015-0119218 | A | |
| | | | | CN | 105190912 | A | |
| JP | 2012-138571 | A | 19 July 2012 | US claims 6-7, 9, paragraphs [0034]-[0041], tables 2-3 | 2014/0011044 | A1 | |
| | | | | WO | 2012/077827 | A1 | |
| | | | | EP | 2650059 | A1 | |
| | | | | TW | 201240107 | A | |
| | | | | CN | 103249502 | A | |
| | | | | KR | 10-2014-0074248 | A | |
| WO | 2005/101551 | A1 | 27 October 2005 | US | 2007/0218333 | A1 | |
| | | | | KR | 10-2006-0129545 | A | |
| | | | | CN | 1969412 | A | |
| JP | 2021-12839 | A | 04 February 2021 | US | 2022/0263095 | A1 | |
| | | | | WO | 2021/006099 | A1 | |
| | | | | EP | 3998362 | A1 | |
| | | | | KR | 10-2022-0012309 | A | |
| | | | | CN | 114080457 | A | |
| JP | 2007-138197 | A | 07 June 2007 | (Family: none) | | | |
| JP | 2021-11620 | A | 04 February 2021 | US | 2022/0243309 | A1 | |
| | | | | WO | 2021/006089 | A1 | |
| | | | | EP | 3998367 | A1 | |
| | | | | KR | 10-2022-0008900 | A | |
| | | | | CN | 113994020 | A | |
| JP | 2003-178766 | A | 27 June 2003 | (Family: none) | | | |
| JP | 2005-126808 | A | 19 May 2005 | (Family: none) | | | |

**INTERNATIONAL SEARCH REPORT**
Information on patent family members

International application No.

**PCT/JP2023/001441**

Form PCT/ISA/210 (patent family annex) (January 2015)

**REFERENCES CITED IN THE DESCRIPTION**

**Patent documents cited in the description**

- JP 2003178753 A

- JP 2016186881 A